(19) Europäisches Patentamt
European Patent Office
Office européen des brevets

(11) Veröffentlichungsnummer: **0 173 176**
**A2**

(12) # EUROPÄISCHE PATENTANMELDUNG

(21) Anmeldenummer: **85110238.4**

(22) Anmeldetag: **16.08.85**

(51) Int. Cl.[4]: **E 21 B 43/22**, E 21 B 43/25

(30) Priorität: **27.08.84 DE 3431414**

(43) Veröffentlichungstag der Anmeldung: **05.03.86**
**Patentblatt 86/10**

(84) Benannte Vertragsstaaten: **AT DE FR GB NL**

(71) Anmelder: **HOECHST AKTIENGESELLSCHAFT,**
**Postfach 80 03 20, D-6230 Frankfurt am Main 80 (DE)**

(72) Erfinder: **Haas, Raimund, Dr., Johannesallee 20,**
**D-6230 Frankfurt am Main 80 (DE)**
Erfinder: **Ohlendorf, Dieter, Dr., Am Kühlen Grund 4,**
**D-6237 Liederbach (DE)**
Erfinder: **Interthal, Werner, Dr., Dr.**
**Ludwig-Opel-Strasse 62, D-6090 Rüsselsheim (DE)**

(54) **Mobilitätskontrolle von Spalt-, Schlitz- oder Porenströmungen.**

(57) Verfahren zur Mobilitätskontrolle von wäßrigen Spalt-, Schlitz- oder Porenströmungen, wobei man dem wäßrigen Medium eine Verbindung der Formel

$R\text{-}K^{+}A^{-}$

zugibt, worin R n-Fluoralkyl, n-Fluoralkenyl, n-Alkyl, n-Alkenyl oder eine Gruppe der Formeln

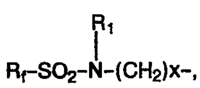,

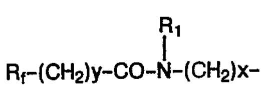 oder

$R_f\text{-}(CH_2)yB(CH_2)x\text{-}$

$R_f$ n-Fluoralkyl oder n-Fluoralkenyl, $R_1$ Wasserstoff, Methyl oder Ethyl, $_x$ eine ganze Zahl von 2 bis 6, y 0, 1 oder 2, B ein Sauerstoff- oder Schwefelatom, K+ ein Kation der Formeln

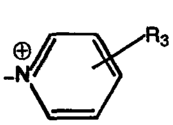 oder 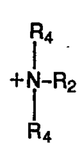

$R_3$ Wasserstoff, Methyl oder Ethyl, $R_4$ jeweils gleich oder verschieden sein können und Wasserstoff, $C_1$–$C_3$-Alkyl oder $C_1$–$C_3$-Hydroxyalkyl an $A^-$ ein organisches Sulfonat-, Carboxylat-, Benzoat-, Phenylsulfonat- oder Naphthoat-Anion, Jodid oder Rhodanid bedeuten.

ACTORUM AG

HOECHST AKTIENGESELLSCHAFT HOE 84/F 194 Dr.OT/mü

Mobilitätskontrolle von Spalt-, Schlitz- oder Porenströmungen

Es ist in der Technik oft erwünscht, Strömungen von Flüssigkeiten durch Spalte, Schlitze oder Porenräume zu verlangsamen oder zu kontrollieren. So wird z.B. angestrebt, die Leckageverluste durch Spalte in Hydrauliksystemen zu minimieren oder eine Verlangsamung von Sickerströmungen in Mülldeponien oder Baugruben zu erreichen, was einen erheblichen technischen Vorteil bedeuten kann. Bei der sogenannten tertiären Erdölförderung (Erdölintensivförderung) schließlich ist u.a. eine Mobilitätskontrolle der Flutbank, die das Erdöl aus den porösen Lagerstätten verdrängen soll, notwendig, um einen möglichst hohen Entölungsgrad zu erreichen. Es ist bekannt, daß die Verlangsamung dieser Spalt- oder Porenströmungen durch Zusätze erreicht werden kann, die die Scherviskosität des Flutmediums erhöhen. Insbesondere für die Erdölintensivförderung wurden bereits zahlreiche Verfahren beschrieben, die auf einer scherviskositätserhöhenden Wirkung der wäßrigen Flutfront beruhen. Zur Steigerung der Viskosität werden dabei vor allem hochpolymere lösliche Zusätze empfohlen (US-PS 3 724 545).

Die mit Hochpolymeren verdickten Flüssigkeiten weisen jedoch in der Praxis eine Reihe von Nachteilen auf. So wird z.B. der viskositätserhöhende Effekt von Hochpolymeren in wäßrigen Lösungen stark durch die Temperatur und durch den Zusatz von Elektrolyten beeinflußt. Unter den Bedingungen der Erdöllagerstätten mit erhöhter Temperatur und Salinität des Lagerstättenwassers nimmt die verdickende Wirkung der Polymeren in der Regel rasch ab. Selbst wenn es jedoch gelingt, durch extrem hohe Konzentrationen an Polymeren oder durch den Einsatz spezieller Polymerer im Flutwasser die geforderte Temperatur- und Elektrolytstabilität näherungsweise zu erreichen, so verlangsamen diese Zusätze jedoch gleichmäßig die Mobilität der Strömung in allen Porengebieten. Dies bedeutet, daß in den von der Einpreßsonde

zur Fördersonde durchgebrochenen (Fingering) Fließkanälen im Porenraum nach wie vor der Hauptanteil des Flutwassers an den ölführenden Gebieten, wenn auch verlangsamt, vorbeifließt.

Speziell zur Vermeidung dieses Nachteils wurde in der europäischen Patentanmeldung 80 104 489.2 vorgeschlagen, spezielle Polymermischungen zu verwenden, die nur an den Stellen einen drastisch erhöhten Fließwiderstand zeigen, an denen die Flutflüssigkeit zur Fördersonde hin durchbrechen will. Dieses Verfahren ist zwar ein wesentlicher Fortschritt, beseitigt aber nicht die Nachteile, die generell mit der Verwendung von Polymeren verbunden sind, wie etwa deren Temperatur- und Elektrolytempfindlichkeit und vor allem deren Scherempfindlichkeit. Infolge dieser Nachteile können die Polymere relativ leicht abgebaut und zerstört werden und verlieren somit rasch zumindest einen großen Teil ihrer verdickenden Wirkung.

Überraschenderweise wurde nun gefunden, daß man anstelle dieser Polymeren auch bestimmte fluorierte kationische Verbindungen verwenden kann, die die Nachteile der Polymeren nicht zeigen. Diese fluorierten kationischen Verbindungen erhöhen strömungsaktiv den Fließwiderstand des Flutmediums in einem bestimmten Geschwindigkeitsbereich und beeinflussen somit im gewünschten Sinne dessen Mobilität.

Weiterhin wurde gefunden, daß die nachfolgend aufgeführten Verbindungen in reiner Form auch ohne jegliche Zusätze in wäßriger Lösung schon in kleinsten Konzentrationen - auch in Gegenwart von Kohlenwasserstoffen - ihre fließwiderstandserhöhende Wirkung in Spalt-, Schlitz- oder Porenströmungen nicht verlieren und auch bei Dauerbeanspruchung ihre Effektivität beibehalten.

Gegenstand der Erfindung ist somit ein Verfahren zur Mobilitätskontrolle von wäßrigen Spalt-, Schlitz- oder Porenströmungen, das dadurch gekennzeichnet ist, daß man dem wäßrigem Medium eine Verbindung der Formel

$$R\text{-}K^{\oplus}A^{\ominus}$$

zugibt,

wobei R n-Fluoralkyl, n-Fluoralkenyl, n-Alkyl, n-Alkenyl oder eine Gruppe der Formeln

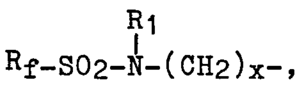 , 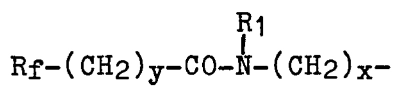 oder

$R_f-(CH_2)_yB(CH_2)_x-$

$R_f$ n-Fluoralkyl oder n-Fluoralkenyl, $R_1$ Wasserstoff, Methyl oder Ethyl, X eine ganze Zahl von 2 bis 6, y 0, 1 oder 2, B ein Sauerstoff- oder Schwefelatom, K+ ein Kation der Formeln

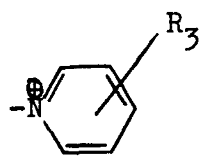 oder 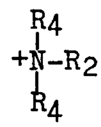

$R_2$ Wasserstoff, $C_1$-$C_4$-Hydroxyalkyl, $C_1$-$C_5$-Alkyl, Benzyl oder Phenyl, $R_3$ Wasserstoff, Methyl oder Ethyl, $R_4$ jeweils gleich oder verschieden sein können, Wasserstoff oder $C_1$-$C_3$-Alkyl und $A^-$ für den Fall der fluorierten Gruppen unter der Bedeutung von R ein n-Alkyl-, n-Alkenyl- oder n-Fluoralkylsulfonat-Anion, ein n-Alkyl-, n-Alkenyl- oder n-Fluoralkenylcarboxylat-Anion, ein Benzoat-, Phenylsulfonat-, Naphthoat-, Jodid-, Rhodanid-Anion oder ein Anion der Formel $C_n\,Cl_{2n+1}\,COO^-$ mit n = 1,2 oder 3 und A- für den Fall der nichtfluorierten Gruppe unter der Bedeutung von R ein n-Alkyl-, n-Alkenylcarboxylat-Anion, ein n-Fluoralkyl- oder n-Fluoralkenylcarboxylat-Anion oder ein

n-Fluoralkylsulfonat- oder n-Fluoralkenylsulfonat-Anion bedeuten, wobei die Verbindungen ausgenommen sind für die Fälle R = Fluoralkyl, $K^+$ Trialkylammonium, $A^-$ : Jodid; R = Alkyl, $K^+ = N^+H_3$, $A^-$ = Fluoralkylcarboxylat und $R-K^+ = (C_1-C_2)$-Trialkylammonium, $A^-$ = Fluoralkylsulfonat und Fluoralkylcarboxylat, ebenso die Salze der Formeln $[C_{16}H_{33}N(CH_3)_3]^+$ $C_nH_{2n+1}COO^-$, $C_{16}H_{33}$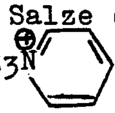 $C_nH_{2+1}COO^-$,

$[C_nH_{2n+1}$ 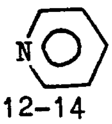 $]$ $C_xF_{2x+1}COO^-$

für n = 12-14
und x = 1-3.

Bevorzugt sind hierbei solche Verbindungen der Formel $R-K^+A^-$ wobei R $C_8-C_{14}$-n-Fluoralkyl, $C_8-C_{14}$-n-Fluoralkenyl, $C_1-C_{24}$-n-Alkyl oder $C_1-C_{24}$-n-Alkenyl, oder eine Gruppe der Formeln

$R_f-SO_2-N(R_1)-(CH_2)_x-$, $R_f-(CH_2)_y-CO-N(R_1)-(CH_2)_x-$ oder ,

$R_f-(CH_2)_yB(CH_2)_x-$

$R_f$ $C_8-C_{14}$-n-Fluoralkyl oder $C_8-C_{14}$-n-Fluoralkenyl, $R_1$ Methyl oder Ethyl, X eine ganze Zahl von 2 bis 6, y 0, 1 oder 2, B ein Sauerstoff- oder Schwefelatom, $R_3$ Wasserstoff, $R_4$ Wasserstoff oder Methyl oder Ethyl und $A^-$ für den Fall der fluorierten Gruppen unter der Bedeutung von R ein $C_5-C_8$-n-Alkyl- oder n-Alkenylsulfonat-Anion, ein Trifluormethyl- oder Pentafluorethylsulfonat-Anion, ein $C_6-C_8$-n-Alkyl- oder n-Alkenylcarboxylat-Anion, ein $C_1-C_4$-n-Perfluoralkyl- oder $C_1-C_4$-n-Perfluoralkenylcarboxylat-Anion, ein Anion der Formel

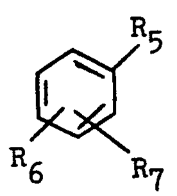

oder

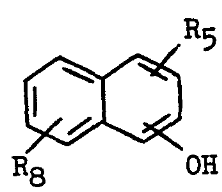

$R_5$-COO$^-$ oder -$SO_3^-$, $R_6$ $C_1$-$C_5$-Alkyl, $C_2$-$C_5$-Alkenyl oder $C_1$-$C_5$-Alkoxy in den Stellungen 3, 4 oder 5 zu $R_5$, $R_7$ Wasserstoff oder Hydroxy in den Stellungen 2 oder 3 zu $R_5$ oder $R_7$ $NO_2^-$, $F^-$, $Cl^-$, Br- oder $J^-$ in der Stellung 3 zu $R_5$, $R_8$ Wasserstoff oder Methyl, oder $A^-$ ein Jodid-, Rhodanid-Anion oder ein Anion der Formel $C_2Cl_{2n+1}COO^-$ mit n = 1,2 oder 3 und A- für den Fall der nichtfluorierten Gruppen unter der Bedeutung von R ein n-Fluoralkyl- oder n-Fluoralkenyl-carboxylat-Anion, wobei die Summe von (2 x + n) eine ganze Zahl von 19 bis 24 betragen soll, wenn x die Anzahl der C-Atome im Carboxylat-Anion und n die Anzahl der C-Atome in der Gruppe R ist; ein n-Fluoralkyl- oder n-Fluoralkenylsulfonat-Anion, wobei die Summe von (2y + n) 17 oder 18 betragen soll, wenn y die Anzahl der C-Atome im Sulfonat-Anion und n die Anzahl der C-Atome in der Gruppe R ist oder A- ein n-Alkyl- oder n-Alkenyl-carboxyl-Anion bedeutet, wobei die Summe (z + n) eine ganze Zahl größer als 23 betragen soll, ausgenommen n = 16, wenn z die Anzahl der C-Atome im Carboxylat-Anion und n die Anzahl der C-Atome in der Gruppe R ist.

Besonders bevorzugt sind die Verbindungen der Formel R-K+$A^-$ wobei R-K+ ein Kation der Formel

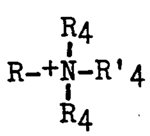 oder 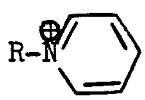

R eine Gruppe der Formeln
$C_nF_{2n+1}$-$C_lH_{2l}^-$, $C_nF_{2n+1}$-$C_lH_l$- $C_nF_{2n+1}$-$CONR_1C_kH_{2k}$- oder $C_nF_{2n+1}$-$C_2H_4SC_kH_{2k}$-, $C_nF_{2n+1}$ $SO_2NR_1C_kH_{2k}$-,

n eine Zahl von 2 bis 10, l eine Zahl von 2 bis 20, k eine Zahl von 2 bis 6, wobei die Summe (2n+l) eine Zahl von 12 bis 24 betragen soll, $R_4$ Methyl oder Ethyl, $R_4'$

Methyl, Ethyl, Hydroxymethyl oder Hydroxyethyl, $R_1$ Methyl oder Ethyl,
$A^-$ ein 2-Hydroxyphenylsulfonat-, m-Halogenbezoat- oder Salicylat-Anion, ein Anion der Formel

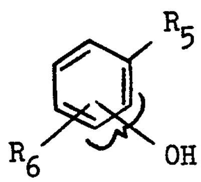

worin $R_5$ COO- oder $SO_3$- und $R_6$ $C_nH_{2n+1}$- oder $C_nH_{2n}$- oder $C_nH_{2n+1}$-O- mit n einer Zahl von 1 bis 4 in den Stellungen 3, 4 oder 5 zu $R_5$ bedeuten oder $A^-$ eine 2-Hydroxy-1-naphthoat-, 3- oder 4-Hydroxy-2-naphthoat-, 2-Hydroxynaphthalin-1-sulfonat-, 3- oder 4-Hydroxy-naphthalin-2-sulfonat-Anion, oder $A^-$ ein Anion der Formel $CF_3SO_3$- oder n-$C_xH_{2x+1}$-$SO_3^-$ ist, wobei x 6 ist für den Fall (2 n+1) mindestens 18, x ist 7 für den Fall (2n+1) mindestens 16 oder x ist 8 für den Fall (2 n+1) eine Zahl von 14 bis 18 oder $A^-$ ist ein Anion der Formel n-$C_xF_{2x+1}$-$COO^-$, wobei x 2 oder 3 ist, wenn (2n+1) eine Zahl von 16 bis 22 ist oder x ist 4 oder 5, wenn (2n+1) eine Zahl von 14 bis 20 ist oder x ist eine Zahl von 6 bis 9, wenn (2n+1) eine Zahl von 14 bis 22 ist, oder $A^-$ ein Anion der Formeln $SCN^-$, $J^-$ oder $CCl_3COO^-$ bedeutet für den Fall n mindestens 6 und (2n+1) mindestens 16.

Besonders bevorzugt sind auch die Verbindungen der Formel $R\text{-}K^+A^-$, wobei $R\text{-}K^+$ ein Kation der Formel

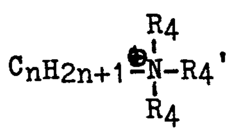

oder

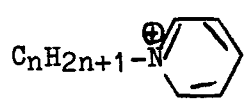

n eine Zahl von 1 bis 22, $R_4$ Methyl oder Ethyl, $R_4'$ Wasserstoff, Methyl, Ethyl, Hydroxymethyl oder Hydroxyethyl, $A^-$ ein Anion der Formeln $n-C_2F_{2x+1}-COO^-$ bedeutet, wobei x 2 oder 3 ist, wenn n+2x eine Zahl von 20 bis 28 ist, oder x ist 4 oder 5 wenn n+2x eine Zahl von 20 bis 26 ist, oder x ist eine Zahl von 6 bis 9 , wenn n+2x eine Zahl von 19 bis 22 ist, oder $A^-$ ist ein Anion der Formel $n-C_xH_{2x+1}COO^-$, wobei x eine Zahl von 7 bis 9 ist, wenn (n+x) eine Zahl von 23 bis 31 ist, ausgenommen den Fall n = 16, oder $A^-$ ein Anion der Formel $n-C_xF_{2x+1}-SO_3^-$, wobei x eine Zahl ist, die so gewählt ist, daß die Summe (2x+n) 17 oder 18 beträgt.

Von besonderem Interesse sind die Verbindungen der Formel $(C_8F_{17}SO_3^-)(R_4-N(R_1, R_2,R_3))$, wobei $R_1$ Methyl oder Ethyl, $R_2$ Methyl oder Ethyl, $R_3$ Wasserstoff, Ethyl oder Methyl und $R_4$ Wasserstoff, Methyl oder Ethyl bedeuten sowie der Formel $(C_nH_{2n+1}{}^+NH_3)(C_xF_{2x+1}COO^-)$, wobei n eine Zahl von 14 bis 18 und x eine Zahl von 1 bis 3, insbesondere 1 bedeuten.

Die Herstellung der fluorierten Verbindungen kann auf folgenden Wegen erfolgen. Bei Perfluoralkylgruppen enthaltenden Ammoniumjodiden geht man zweckmäßigerweise von den entsprechenden Dimethylaminen bzw. Amidaminen mit Dimethylamin-Strukturen aus und quaternisiert mit Methyljodid. Die Umsetzung kann in niederen Alkoholen wie Methanol, Ethanol, Isopropanol und ähnl. als Lösungsmittel erfolgen. Die entstandenen Trimethylammoniumjodide sind in diesem Falle in den genannten Alkoholen löslich. Die Quaternisierung kann jedoch auch in aprotischen Lösungsmitteln wie $Cl_4$, $CHCl_3$, $CH_2Cl_2$ oder 1.1.2-Trichlor-1.2.2-trifluorethan durchgeführt werden. Die Reaktion verläuft unter Rückflußtemperaturen des jeweiligen Lösungsmittels. Um die Reaktionsgeschwindigkeit zu erhöhen ist es jedoch zweckmäßig, die Temperatur bei 100°C oder 120°C durchzuführen, wobei jedoch wegen der niedrigen Siedetemperatur des Methyljodids unter Druck gearbeitet werden muß.

Hexahydro- bzw. Oktahydroperfluoralkyltrimethylammonium-jodid der allgemeinen Formel

$$[R_F\ (CH_2)_n\ \overset{\oplus}{N}(CH_3)_3\ )\ J^{\ominus} \quad n = 3,4$$

können auch durch dirkete Alkylierung von Trimethylamin mit den entsprechenden Perfluoralkylgruppen enthaltenden Jodiden hergestellt werden.

Sollen die gewünschten Perfluoralkyltrimethylammoniumcarboxylate hergestellt werden, ist es zweckmäßig, zunächst die Silbersalze der betreffenden Carbonsäure herzustellen. Dazu wird die Carbonsäure mit einer stöchiometrischen Menge an Alkali versetzt. Zu dem im Wasser löslichen Alkalisalz wird Silbernitrat-Lösung gegeben. Das sich bildende Silbercarboxylat ist wenig wasserlöslich, fällt aus und kann abgesaugt und getrocknet werden.

Die Herstellung der Perfluoralkyltrimethylammoniumcarboxylate erfolgt am besten in wasserfreien Lösungsmitteln wie Methanol, Ethanol oder Isopropanol durch Zusammengeben stöchiometrischer Mengen an Silbercarboxylat und Perfluoralkyltrimethylammoniumhalogenid bei Temperaturen von 50 - 60°C. Nach Abkühlen wird vom gebildeten Silberhalogenid abgesaugt und durch Eindampfen des Filtrats das gewünschte Perfluoralkylgruppen enthaltende Trimethylammonium-carboxylat gewonnen. Eine weitere Reinigung kann durch Umkristallisieren aus Lösungsmitteln wie Essigsäureethylester, Aceton, Acetonitril erfolgen.

Eine weitere Herstellmöglichkeit für die gewünschten Perfluoralkylgruppen ethaltenden Trimethylammoniumcarboxylate besteht auch in der Gewinnung der Alkyltrimethylammmonium-Hydroxidlösung durch Behandlung der Alkyltrimethylammoniumhalogenide oder anderen Salzen mit einem stark basischen Anionenaustauscher, was in einem

wasserfreien Lösungsmittel wie Methanol oder Ethanol durchzuführen ist. Anschließend wird mit der gewünschten Carbonsäure neutralisiert und das Salz aus der Lösung durch Eindampfen gewonnen.

Die genannten Verbindungen eignen sich zur Erhöhung des Fließwiderstandes von wässrigen Medien in Spalt-, Schlitz- oder Porenströmungen. Sie werden zugegeben in Konzentrationen von 0,005 bis 5 Gew.-%, bevorzugt von 0,05 bis 1 Gew.-%, besonders bevorzugt von 0,1 bis 0,5 Gew.-%. Für jedes Tensid existiert jedoch in Abhängigkeit von der Temperatur eine andere untere kritische Konzentrationsgrenze für eine ausreichende Wirkung als Fließwiderstandserhöher (FWE), die jedoch, wie weiter hinten beschrieben, durch einen einfachen Vorversuch bestimmt werden kann. Die Wirkung als FWE ist abhängig von der Temperatur. Die genannten Verbindungen wirken insgesamt in einem Temperaturbereich von 0°C bis 135°C; ein einzelnes Tensid zeigt Wirksamkeit als FWE jedoch nur über ein Temperaturintervall von ca. 40°C (∓ 15°C). Die untere Temperaturgrenze ist bei allen Tensiden die Löslichkeitstemperatur (isotrope Lösung) oder besser der Krafft-Punkt. Ist das Tensid jedoch in Lösung, so kann die Löslichkeitstemperatur, in den meisten Fällen, für einige Stunden bis Wochen um 5 bis 25°C unterschritten werden, ohne daß ein Verlust der Wirksamkeit als FWE auftritt.

Die Wirksamkeit der genannten Verbindungen als FWE wurde nicht nur in entionisiertem Wasser (E-Wasser) bei einem pH-Wert von 5 bis 7 untersucht, sondern es wurden auch verschiedene Salze (Fremdelektrolyte), wie z.B. NaCl oder $CaCl_2$ und andere zugesetzt oder auch der pH-Wert der Lösungen durch Zugabe von NaOH oder HCl variiert. Es zeigte sich, daß die Zugabe von Fremdelektrolyten von keiner Beeinflussung (siehe Beispiel 8) bis zu einer Verringerung (siehe Beispiel 7) der Wirksamkeit als FWE führt; ein

analoges Verhalten ergibt sich bei der Änderung des pH-Wertes. Die Menge an Fremdelektrolyt, die man der wässrigen Tensidlösung zugeben kann, ist nach oben begrenzt durch die Konzentration, bei der ein Aussalzeffekt für das Tensid auftritt, verbunden mit einer Abnahme oder dem völligen Verschwinden der Wirksamkeit als FWE (vgl. Beispiel 7). Die Höchstkonzentration wird auch durch den Fremdelektrolyten bestimmt und ist um so niedriger, je höher die Wertigkeit (Ladung) von Anion oder Kation ist.

Anstelle der Zugabe der erfindungsgemäß genannten Tenside kann man auch so vorgehen, daß man das Halogensalz des Kations R-K+ Hal-, wie z.B.

$(C_nH_{2n+1}N(CH_3)_3)$ Hal, $(C_nH_{2n+1}$ 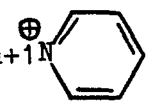 )Hal,

$(C_nF_{2n+1}C_lH_{2l}N(CH_3)_3)$ Hal,

$(C_nF_{2n}\ C_lH_{2l}N(CH_3)_3)$ Hal,

$(C_nF_{2n+1}CONH\ C_2H_{2l}N(CH_3)_3)$ Hal,

$C_nF_{2n+1}SO_2N(C_2H_5)\ C_lH_{2l}N(CH_3)_3$ Hal
oder
$(C_nF_{2n+1}CH_2CH_2SCH_2CH_2N(CH_3)_3\ )A$
mit A = Hal- der $CH_3SO_4^-$

oder die entsprechenden Pyridiniumverbindungen mit Hal = Cl oder Br im molaren Verhältnis 1:1 gemischt mit einem Alkalisalz des Anions NaA, wie z.B. Natriumsalicylat oder andere Natrium-hydroxi-benzoate oder Natrium-3-hydroxi-2-naphthoat oder Natriumhydroxinaphthoate oder die Natriumsalze der genannten Carbon- und Sulfonsäuren als Fließwiderstandserhöher einsetzt. Die Wirkung

ist dann gleich der Wirkung, die man mit den reinen Tensidsalzen unter Zusatz von Alkalihalogeniden erreicht. Auch Mischungen, die vom molaren Verhältnis 1:1 abweichen, wie z.B. 1:2, zeigen Wirkung als FWE.

Die maximale Wirksamkeit als Fließwiderstandserhöher ist auch von der Zeit abhängig, die verstrichen ist seit der Herstellung der wässrigen Tensidlösungen. Die Tensidlösungen zeigen zwar bereits sofort nach dem Ansetzen der Lösungen eine Wirkung als Fließwiderstandserhöher, doch kann sich diese Wirkung während einer Woche noch deutlich ändern. Die Zeit, die benötigt wird, um eine konstante Wirkung zu erzielen, läßt sich für den Einzelfall unschwer durch einfache Versuche ermitteln. In den meisten Fällen wird eine konstante Wirkung nach 1 bis 3 Tagen, in wenigen Fällen nach einer Woche erreicht. Eine Änderung, d.h. Verbesserung oder Verschlechterung der Wirkung als FWE tritt dann nicht mehr ein.

Von einigen Tensiden, wie z.B. dem Hexadecylpyridiniumsalicylat ist bekannt (H. Hoffmann et al., Ber. Bunsenges. Phys. Chem. 85 (1981) 255), daß sie ab einer ganz bestimmten, für jedes Tensid charakteristischen Konzentration, der $CMC_{II}$, große, nichtkugelförmige, meist stäbchenförmige Mizellen aus den einzelnen Tensidionen und Gegenionen aufbauen.

Überraschenderweise wurde nun gefunden, daß Tenside in wässriger Lösung immer dann als Fließwiderstandserhöher wirksam sind, wenn sie für Konzentrationen größer der $CMC_{II}$ nichtkugelförmige, vorzugsweise stäbchenförmige Mizellen ausbilden. Nichtkugelförmige, vorzugsweise stäbchenförmige Mizellen liegen vor, wenn bei der Untersuchung der isotropen Tensidlösung mit Hilfe der Methode der elektrischen Doppelbrechung mit gepulstem, rechteckförmigen elektrischen Feld (E.Fredericq und C. Houssier,

Eletric Dichroism and Eletric Birefringence, Claredon Press, Oxford 1973 und H. Hoffmann et al., Ber. Bunsenges. Phys. Chem. 85 (1981) 255) ein Meßsignal gefunden wird, aus dessen Abfall sich eine Relxationszeit von $\tau$ >0,5 µs bestimmen läßt. Die untere Konzentrationsgrenze, ab der ein Tensid in wässriger Lösung als FWE wirksam ist, wird daher immer durch die $CMC_{II}$, vorzugsweise durch den 1,3 bis 2-fachen Konzentrationswert der $CMC_{II}$, festgelegt. Die Bestimmung der $CMC_{II}$ ist z.B. durch Messung der elektrischen Leitfähigkeit der Tensidlösung in Abhängigkeit von der Tensidkonzentration möglich, wie bei H.Hoffmann et al. (Ber. Bunsenges, Phys. Chem. 85 (1981) 255) beschrieben. Es zeigte sich, daß der Wert der $CMC_{II}$ temperaturabhängig ist und sich mit zunehmender Temperatur zu höheren Tensidkonzentrationen verschiebt.

Zur Festlegung der Tensidkonzentration, die minimal notwendig ist, um eine ausreichende Wirkung als FWE in einem bestimmten Temperaturbereich zu erzielen, ist die Bestimmung der $CMC_{II}$ bei der Anwendungstemperatur mit Hilfe der elektrischen Leitfähigkeit ein geeigneter Vorversuch.

Die Untersuchung der genannten Tenside auf ihre Wirksamkeit zur Erhöhung des Fließwiderstandes von Flutungsmedien in porösen Medien oder ähnlichen Strömungsgeometrien erfolgte mit Hilfe der in DE-OS 29 04 848 beschriebenen Apparatur, indem für die jeweilige wäßrige Lösung der Tenside der Druckabfall $\Delta P$ über die Strecke $\Delta L$ bei Durchströmen eines mit Feststoffpartikeln gefüllten Meßrohres mit dem Durchmesser D für verschiedene Filtergeschwindigkeiten V gemessen wurde. Aus diesen Werten lassen sich die dimensionslosen Größen, Reibungsbeiwert f und Renoldszahl Re, berechnen, gemäß

$$f = \frac{\Delta P}{\varrho v^2} \; \frac{d}{\Delta L} \; \frac{n^3}{(1-n)}$$

$$Re = \frac{v.d.\varrho}{\eta(1-n)}$$

wobei $\varrho$ die Dichte, $\eta$ die dynamische Scherviskosität, d der mittlere Durchmesser der Feststoffpartikel und n die Volumenporosität der Schüttung bedeuten. Üblicherweise werden für $\varrho$ und $\eta$ jeweils die entsprechenden Werte des reinen Lösungsmittels, Wasser, eingesetzt. Aus den so erhaltenen Werten, f und Re, gewinnt man als Produkt dieser beiden Größen die Widerstandskennzahl

$$\Lambda = f \cdot Re,$$

die für die untersuchten Tensid-Lösungen in der üblichen doppelt-logarithmischen Auftragung gegen Re mit den entsprechenden Werten für reines Wasser verglichen wurde. Wie aus Figur 1 ersichtlich ist, ergibt sich die reine Wasserströmung durch ein poröses Medium eine Widerstandskennzahl $\Lambda_{H_2O}$, die für Re $\leq$ 5 unabhändig von der Reynoldszahl Re ist. Eine widerstandserhöhende Wirkung oder auch Dehnviskositätserhöhung liegt dann vor, wenn gilt: $\Lambda_{TL} - \Lambda_{H_2O} > 0$, für Re = konstant, wenn die relative Widerstandskennzahl $\Lambda_R = \Lambda_{TL}/\Lambda_{H_2O}$ den Wert 1 übersteigt ($\Lambda_{TL}$ = Widerstandskennzahl der Tensidlösung).

Die genannten Tensidlösungen wirken als fließwiderstandserhöhende Zusätze in der Weise, daß die widerstandskennzahl $\Lambda$ überhalb einer Einsatz-Reynoldszahl $Re_0$ (siehe Abbildung 2) mit ansteigender Reynoldszahl sehr schnell zunimmt, dann aber nach Überschreiten einer bestimmten Reynoldszahl $Re_{max}$, mit maximaler Widerstandserhöhung, wieder abnimmt. Der Grad der Wirksamkeit einer Tensidlösung als widerstands- oder dehnviskositätserhöhendes Medium soll im

folgenden Text durch die relative Widerstandskennzahl $\Lambda_R$ gekennzeichnet werden; demnach weist eine Tensidlösung mit $\Lambda_R = 20$ eine bessere Wirksamkeit als fließwiderstandshöheres Medium auf als eine Tensidlösung mit $\Lambda_R = 10$. Bei besonders wirksamen Tensidlösungen kann oft die sehr kleine Einsatzreynoldszahl meßtechnisch nur schwer erreicht werden (vgl. Fig. 1), so daß in solchen Fällen durch die Angabe von $\Lambda$ oder $\Lambda_R$ bei einer bestimmten Reynoldszahl die FWE ausreichend beschrieben ist.

Die Untersuchungen der Tensidlösungen ergaben nur dann reproduzierbare Ergebnisse, wenn die wäßrigen Lösungen der Tensidsalze vor den Messungen jeweils für ca. 1 Woche bei den Meßtemperaturen aufbewahrt wurden. Die Lösungen zeigen zwar auch sofort nach dem Ansetzen ein Wirkung als widerstandserhöhendes Medium, die sich jedoch im Verlauf einer Woche noch deutlich ändern kann.

Die so vorbehandelten Tenside wurden einer Vielzahl von Tests unterzogen. So ergab ein mehrmaliges Durchpresen derselben Tensidlösung, wie aus Beispiel 4 ersichtlich, daß bei den aufgeführten Tensiden keine Abnahme ihrer fließwiderstandserhöhenden Wirkung durch mechanischen oder chemischen Abbau auftritt. Weiterhin zeigte sich, daß die fließwiderstandserhöhende Wirkung der genannten Tenside mit zunehmender Konzentration zunimmt, wobei die gleichzeitig auftretende Scherviskositätserhöhung bei zunehmender Tensidkonzentration, wie diese in einem herkömmlichen Viskosimeter ermittel werden kann, im Vergleich zur fließwiderstandserhöhenden Wirkung in einem porösen Medium vernachlässigbar klein ist. Es zeigt sich auch, daß eine Verringerung des mittleren Partikeldurchmessers der Schüttung zu niedrigen Einsatz-Reynoldszahlen bzw. niedrigen Einsatz-Filtergeschwindigkeiten des fließwiderstandserhöhenden Effektes führt, während der Maximalwert der erzielbaren Widerstandserhöhung konstant bleibt. Es

wurde auch gefunden, daß die genannten fließwiderstandserhöhenden Effekte der Tensidlösungen einerseits in Schüttungen, hergestellt aus kugeligem Gleichkorn, in Schüttungen hergestellt aus kugeligem Korn mit breiter Partikeldurchmesserverteilung, andererseits in Sandpackungen hergestellt aus kantigem Kornmaterial mit enger oder breiter Durchmesserverteilung auftreten.

Die durchgeführten Untersuchungen zeigen, daß sich die genannten Tensid-Salze als Fließwiderstandserhöher überall dort eignen, wo wäßrige Strömungen durch Spalte, Schlitze oder Porenräume kontrolliert und/oder verlangsamt werden sollen. Insbesondere kann durch den Einsatz der Tensid-Salze bei der Erdölintensivförderung (tertiäre Erdölförderung) das gefürchtete Ausfingern ("Fingering") der Flutfront mit nachfolgendem Durchbruch zur Fördersonde verhindert und somit die Erdölausbeute gesteigert werden.

Zur Erzielung einer optimalen Wirkung als FWE sollten bei der Erdölintensivförderung die verdünnten wäßrigen Lösungen der Tensid-Salze eine bis mehrere Stunden vor der Anwendung in z.B. Vorratstanks durch Rühren und gegebenenfalls durch Erwärmen angesetzt werden, bevor die Lösungen in der üblichen Weise durch Pumpen in die Lagerstätte eingepreßt werden. Auch eine Lagerung der verdünnten Lösungen in den Vorratstanks über Tage bis Wochen ohne Abnahme der Wirksamkeit ist möglich, solange die Löslichkeitstemperatur des jeweiligen Tensid-Salzes nicht deutlich unterschritten wird.

<u>Beispiel 1</u>

Von der Verbindung

$(C_8F_{17}(CH_2)_4N(CH_3)_3)^{\oplus}$ 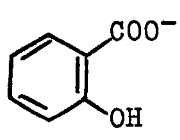

(abgekürzt: $(CF)_8$ $(CH)_4$ Ta-Sal) wurde eine Konzentrationsreihe von 250, 500 und 1000 Gew.-ppm in E-Wasser angesetzt, indem die entsprechenden Gewichtsmengen von 0,625; 1,25 und 2,5 g des $(CF)_8$ $(CH)_4$ TA-Salzes mit E-Wasser auf 2500 g eingewogen wurden. Während des Auflösens (Löslichkeitstemperatur ca. 40°C) wurden die Lösungen kurz auf 90°C erhitzt und nach dem Abkühlen auf 40°C für eine Woche ohne Rühren bei dieser Temperatur aufbewahrt.

Die Untersuchung auf Fließwiderstandserhöhung erfolgte anschließend in einer Porenströmungsapparatur (vgl. DE-PS 29 04 848), indem eine Flüssigkeitsmenge von 2500 $cm^3$ aus einem druckbeaufschlagten, thermostatisierbaren Vorratsbehälter durch das mit Feststoffpartikeln gefüllte, ebenfalls temperierbare Meßrohr gepreßt wurde. Der Durchfluß wurde über ein regelbares Ventil am Ende der Meßstrecke gesteuert und durch Bestimmung des ausfließenden Volumens pro Zeiteinheit gemessen, so daß bei gleichzeitiger Messung des Druckverlustes entlang der Porenmeßstrecke die Durchflußcharakteristik des Porenkörpers ermittelt werden konnte. Der Durchmesser des Meßrohres betrug D= 25 mm, die Gesamtlänge L= 18,9 mm, die Meßlänge zur Bestimmung des Druckverlustes $\Delta \cdot L$= 8,9 mm und die Anlauflänge zur ersten Druckmeßbohrung $L_A$= 5 mm. Die Messung wurde so durchgeführt, daß mit der höchsten Fließgeschwindigkeit begonnen und die Geschwindigkeit anschließend stufenweise erniedrigt wurde. Der Porenkörper stellt eine Zufallsschüttung aus eng fraktionierten Glaskugeln mit einem Partikeldurchmesser d= 100 µm dar.

In Tabelle 1 sind die mit den Lösungen unterschiedlicher Konzentration erhaltenen Ergebnisse zusammengefaßt, wobei zu drei Reynoldszahlen ($10^{-2}$; $10^{-1}$; 10°) die Widerstandskennzahl $\Lambda$ sowie die relative Widerstandskennzahl $\Lambda_R$ angegeben sind. In Fig. 1 ist der gesamt Verlauf der Messung der 1000 ppm-Lösung in der Darstellung $\Lambda$ gegen Reynoldszahl angegeben. Die waagrechte, durchgezogene Linie entspricht den $\Lambda$ -Werten, die mit der reinen Wasserströmung erhalten wurden.

Beispiel 2

Es wurden Lösungen von $(CF)_8$ $(CH)_4$ TA-Sal in Konzentrationen von 250, 500 und 1000 ppm wie in Beispiel 1 beschrieben hergestellt und bei 55°C gemessen. Die erhaltenen $\Lambda$ und $\Lambda_R$-Werte sind in Tabelle 2 angegeben.

Beispiel 3

Die gleichen Lösungen wie in Beispiel 2 wurden bei 70°C gemessen. Die Ergebnisse sind in Tabelle 3 zusammengefaßt.

Beispiel 4

Es wurde eine Lösung $(CF)_8$ $(CH)_4$ TA-Sal in einer Konzentration von 500 ppm in E-Wasser hergestellt und in der Porenströmungsapparatur mit d= 100 µm bei T= 55°C untersucht. Die gleiche Lösung wurde nacheinander 50mal durch die Meßstrecke bei einer Reynoldszahl von 0,1 gepreßt. Der $\Lambda$-Wert zu Beginn betrug 3800 und blieb bis zur fünfzigsten Messung konstant.

Beispiel 5

Eine Lösung von $[C_{10}F_{21}C_4H_8N(CH_3)_3]^{\oplus}$ $Sal^{\ominus}$ (Sal= Salicylat) von 1000 ppm in E-Wasser wurde wie in Beispiel 1 angesetzt und in der Porenströmungsapparatur bei 70°C (d= 100 µm) vermessen. Bei einer Reynoldszahl von 0,1 wurde ein $\Lambda$-Wert von 22100 gemessen. ($\Lambda_R$= 119,5).

Beispiel 6

Lösungen von $(C_9F_{19}CF= CHCH_2N(CH_3)_3)^{\oplus}$ $Sal^{\ominus}$ mit Konzentrationen von 500, 750 und 1000 ppm wurden in E-Wasser gemäß Beispiel 1 angesetzt und bei 55°C in der Porenströmungsapparatur gemessen. Die Ergebnisse sind in Tabelle 4 angegeben.

Beispiel 7

Es wurden 5 Lösungen von $(C_9F_{19}CF{=}\ CHCH_2N(CH_3)_3)^{\oplus}$ $Sal^{\ominus}$ in einer Konzentration von 750 ppm wie in Beispiel 6 aber mit verschiedenen NaCl-Konzentrationen (0; $5 \cdot 10^{-4}$; $5 \cdot 10^{-3}$; $5 \cdot 10^{-2}$ und 1 $mol/_{l}$Na Cl) angesetzt und bei 55°C in der Porenströmungsapparatur gemäß Beispiel 1 vermessen. Die Ergebnisse sind in Tabelle 5 angegeben.

Beispiel 8

Es wurde wie in Beispiel 7 verfahren, wobei anstelle von NaCl 4 verschieden $CaCl_2$ Lösungen ($5 \cdot 10^{-4}$; $5 \cdot 10^{-3}$; $1 \cdot 10^{-2}$; $1 \cdot 10^{-1}$ $mol/_{l}CaCl_2$ verwendet wurden. Die Ergebnisse sind in Tabelle 6 angegeben.

Beispiel 9

Eine Lösung von $(C_9F_{19}CF{=}\ CHCH_2{-}N(CH_3)_2\ C_2H_4OH)^{\oplus}$ $Sal^{\ominus}$ wurde wie in Beispiel 1 mit einer Konzentration von 1000 ppm angesetzt und in der Porenströmungsapparatur (d= 100 µm) bei 40°C vermessen. Die Meßwerte sind in Abb. 2 aufgetragen. Aus Abb. 2 geht hervor, daß bei $Re < 2 \cdot 10^{-3}$ $\Lambda_R$ wieder= 1 ist, d.h., bei sehr geringen Geschwindigkeiten der Effekt FWE genauso wie bei großen (Re > 6) wieder verschwindet. Der maximale $\Lambda$-Wert beträgt bei Re = 0,16 2100 ($\Lambda_R$= 11,4).

Beispiel 10

Lösungen von 500, 1000 und 2000 ppm der Verbindung $(C_8F_{17}C_4H_8N(CH_3)_3)^{\oplus}J^{\ominus}$ wurden wie in Beispiel 1 beschrieben angesetzt und bei 40°C wie in Beispiel 1 gemessen. Die Meßwerte sind in Tabelle 7 angegeben.

Beispiel 11

Eine Lösung von 1000 ppm der Verbindung $(C_9F_{19}CF=CHCH_2N(CH_3)_3)^{\oplus}$ $C_2F_5COO^{\ominus}$ wurde wie in Beispiel 1 beschrieben angesetzt und bei 55°C gemessen. Der maximale $\Lambda$-Wert von 31000 ($\Lambda_R$= 168) wurde bei einer Re-Zahl von 0,23 erreicht. Die FWE setzt bei einer Re-Zahl von $1 \cdot 10^{-2}$ ein und verschwindet wieder ab Re > 10.

Beispiel 12

Eine Lösung von $(C_{16}H_{33}N(CH_3)_3)^{\oplus}$ $C_3F_7COO^{\ominus}$ wurde wie in Beispiel 1 beschrieben angesetzt und bei 25°C gemessen. Bei Re= 0,01 betrug $\Lambda$= 5200 ($\Lambda_R$= 28,1) und bei Re= 0,1 ist $\Lambda$ = 2300 ($\Lambda_R$= 12,4).

Beispiel 13

Eine Lösung von 1000 ppm der Verbindung $(N(C_2H_5)_4)^{\oplus}$ $C_8F_{17}SO_3^{\ominus}$ wurde wie in Beispiel 1 angesetzt und gemessen (T= 25°C). Die maximale FWE mit $\Lambda$= 2400 ($\Lambda_R$= 13) wurde bei Re= $8 \cdot 10^{-2}$ erreicht. Die FWE verschwindet ($\Lambda_R$= 1) bei Re $2 \cdot 10^{-3}$ und Re > 8.

Beispiel 14

Eine Lösung von 3000 ppm der Verbindung $(C_{16}H_{33}N(CH_3)_3)^{\oplus}$ $C_8H_{17}COO^{\ominus}$ wurde wie in Beispiel 1 angesetzt und gemessen (T= 25°C). Bei einer Re-Zahl von 0,01 wurde ein $\Lambda$-Wert von 28000 ($\Lambda_R$= 151,4) gemessen.

Beispiel 15

Die Verbindung $(C_4H_9N(CH_3)_3)^{\oplus}$ $C_9F_{19}COO^{\ominus}$ wurde mit einer Konzentration von 2000 ppm analog zu Beispiel 1 angesetzt und vermessen (T= 55°C). Bei Re= $6 \cdot 10^{-2}$ ist $\Lambda$ = 420 ($\Lambda_R$= 2,3).

Tabelle 1

Glaskugelschüttung d= 100 µm

$(CF)_8(CH)_4$ TA-Sal T= 40°C

| Konz. (ppm) | Re | $\Lambda$ | $\Lambda_R$ |
|---|---|---|---|
| 250 | 1 | 690 | 3,7 |
| " | 0,1 | 2100 | 11,4 |
| " | 0,01 | 5700 | 185 |
| 500 | 1 | 1600 | 8,6 |
| " | 0,1 | 6300 | 34,1 |
| " | 0,01 | 21000 | 114 |
| 1000 | 1 | 2600 | 14,1 |
| " | 0,1 | 11000 | 59,5 |
| " | 0,01 | 31300 | 169 |

Tabelle 2

$(CF)_8(CH)_4$ TA-Sal T= 55°C d= 100 µm

| Konz. (ppm) | Re | $\Lambda$ | $\Lambda_R$ | |
|---|---|---|---|---|
| 250 | 1 | 185 | 1 | kein Effekt |
| " | 0,1 | 182 | 1 | |
| " | 0,01 | 190 | 1 | |
| 500 | 1 | 1200 | 6,5 | |
| " | 0,1 | 3800 | 20,5 | |
| " | 0,01 | 15000 | 81,1 | |
| 1000 | 1 | 2600 | 14,1 | |
| " | 0,1 | 9300 | 50,3 | |
| " | 0,01 | 26000 | 141 | |

Tabelle 3

$(CF)_8(CH)_4$ TA-Sal    T= 70°C    d= 100 µm

| Konz. (ppm) | Re | $\Lambda$ | $\Lambda_R$ | |
|---|---|---|---|---|
| 250 | 1 | 190 | 1 | kein Effekt |
| " | 0,1 | 182 | 1 | |
| " | 0,01 | 186 | 1 | |
| 500 | 1 | 907 | 4,9 | |
| " | 0,1 | 780 | 4,2 | |
| " | 0,01 | 188 | 1 | |
| 1000 | 1 | 2400 | 13 | |
| " | 0,1 | 3800 | 20,5 | |
| " | 0,01 | 185 | 1 | |

Tabelle 4

$(C_9F_{19}CF{=}\ CHCH_2N(CH_3)_3)^{\oplus}\ Sal^{\ominus}$    T= 55°C    d= 100 µm

| Konz. (ppm) | Re | $\Lambda$ | $\Lambda_R$ |
|---|---|---|---|
| 500 | 0,1 | 1400 | 7,6 |
| 750 | 0,1 | 11000 | 59,5 |
| 1000 | 0,1 | 20000 | 108,1 |

Tabelle 5

$(C_9F_{19}CF{=}\ CH\ H_2N(CH_3)_3)^{\oplus}\ Sal^{\ominus}$    T= 55°C    d= 100 µm

| NaCl-Konz. (mol/l) | Re | $\Lambda$ | $\Lambda_R$ |
|---|---|---|---|
| 0 | 0,1 | 11000 | 59,5 |
| $5\cdot10^{-4}$ | 0,1 | 9700 | 52,4 |
| $5\cdot10^{-3}$ | 0,1 | 8500 | 46 |
| $5\cdot10^{-2}$ | 0,1 | 4500 | 24,3 |
| 1 | 0,1 | 185 | 1 |

Tabelle 6

$(C_9F_{19}CF{=}\ CHCH_2{-}N(CH_3)_3)^{\oplus}\ Sal^{\ominus}$ T= 55°C d= 100 µm

| $CaCl_2$-Konz. (mol/l) | Re | $\Lambda$ | $\Lambda_R$ |
|---|---|---|---|
| $5\cdot10^{-4}$ | 0,1 | 4500 | 24,3 |
| $5\cdot10^{-3}$ | 0,1 | 4500 | 24,3 |
| $1\cdot10^{-2}$ | 0,1 | 4500 | 24,3 |
| $1\cdot10^{-1}$ | 0,1 | 3200 | 17,3 |

Tabelle 7

$(C_8F_{17}C_4H_8N(CH_3)_3)^{\oplus}J^{\ominus}$ T= 40°C d= 100 µm

| Konz. (ppm) | Re | $\Lambda$ | $\Lambda_R$ |
|---|---|---|---|
| 500 | 0,1 | 1500 | 8,1 |
| 1000 | 0,1 | 5400 | 29,2 |
| 2000 | 0,1 | 8400 | 45,4 |

Patentansprüche:

1. Verfahren zur Mobilitätskontrolle von wäßrigen Spalt-, Schlitz- oder Porenströmungen, dadurch gekennzeichnet, daß man dem wäßrigen Medium eine Verbindung der Formel $R-K^+A^-$ zugibt, wobei R n-Fluoralkyl, n-Fluoralkenyl, n-Alkyl, n-Alkenyl oder eine Gruppe der Formeln

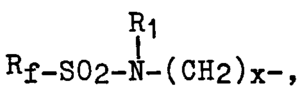, 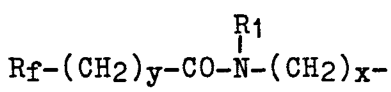 oder

$R_f-(CH_2)_yB(CH_2)_x-$

$R_f$ n-Fluoralkyl oder n-Fluoralkenyl, $R_1$ Wasserstoff, Methyl oder Ethyl, x eine ganze Zahl von 2 bis 6, y 0, 1 oder 2, B ein Sauerstoff- oder Schwefelatom, K+ ein Kation der Formeln

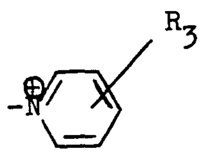 oder 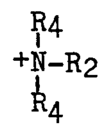

$R_2$ Wasserstoff, $C_1$-$C_4$-Hydroxyalkyl, $C_1$-$C_5$-Alkyl, Benzyl oder Phenyl, $R_3$ Wasserstoff, Methyl oder Ethyl, $R_4$ jeweils gleich oder verschieden sein können, Wasserstoff oder $C_1$-$C_3$-Alkyl und A- für den Fall der fluorierten Gruppen unter der Bedeutung von R ein n-Alkyl-, n-Alkenyl- oder n-Fluoralkylsulfonat-Anion, ein n-Alkyl-, n-Alkenyl- oder n-Fluoralkenylcarboxylat-Anion, ein Benzoat-, Phenylsulfonat-, Naphthoat-, Jodid-, Rhodanid-Anion oder ein Anion der Formel $C_n\ Cl_{2n+1}\ COO^-$ mit n = 1,2 oder 3 und A- für den Fall der nichtfluorierten Gruppe unter der Bedeutung von R ein n-Alkyl-, n-Alkenylcarboxylat-Anion, ein n-Fluoralkyl- oder n-Fluoralkenylcarboxylat-Anion oder ein n-Fluoralkylsulfonat- oder n-Fluoralkenylsulfonat-Anion bedeuten, wobei die Verbindungen ausgenommen sind für die Fälle R = Fluoralkyl, K+ Trialkylammonium, A- :

Jodid; R = Alkyl, $K^+ = N^+H_3$, $A^- =$ Fluoralkylcarboxylat und $R\text{-}K^+ = (C_1\text{-}C_2)$-Trialkylammonium, $A^- =$ Fluoralkylsulfonat und Fluoralkylcarboxylat, ebenso die Salze der Formeln $[C_{16}H_{33}N(CH_3)_3]^+ \; C_nH_{2n+1}COO^-$, $C_{16}H_{33}$ 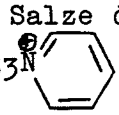 $C_nH_{2+1}COO^-$,

$[C_nH_{2n+1}$ 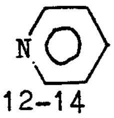 $]\; C_xF_{2x+1}COO^-$

für n = 12-14

und x = 1-3.

2. Verfahren nach Anspruch 1, dadurch gekennzeichnet, daß man dem wäßrigen Medium eine Verbindung der Formel

$$R\text{-}K^+A^-$$

zugibt, wobei R $C_8$-$C_{14}$-n-Fluoralkyl, $C_8$-$C_{14}$-n-Fluoralkenyl, $C_1$-$C_{24}$-n-Alkyl oder $C_1$-$C_{24}$-n-Alkenyl,oder eine Gruppe der Formeln

$$R_f\text{-}SO_2\text{-}\overset{R_1}{\overset{|}{N}}\text{-}(CH_2)_x\text{-}, \qquad R_f\text{-}(CH_2)_y\text{-}CO\text{-}\overset{R_1}{\overset{|}{N}}\text{-}(CH_2)_x\text{-} \quad \text{oder}$$

$$R_f\text{-}(CH_2)_yB(CH_2)_x\text{-}$$

$R_f$ $C_8$-$C_{14}$-n-Fluoralkyl oder $C_8$-$C_{14}$-n-Fluoralkenyl, $R_1$ Methyl oder Ethyl, x eine ganze Zahl von 2 bis 6, y 0, 1 oder 2, B ein Sauerstoff- oder Schwefelatom, $R_3$ Wasserstoff, $R_4$ Wasserstoff oder Methyl oder Ethyl und $A^-$ für den Fall der fluorierten Gruppen unter der Bedeutung von R ein $C_5$-$C_8$-n-Alkyl- oder n-Alkenylsulfonat-Anion, ein Trifluormethyl- oder Pentafluorethylsulfonat-Anion, ein $C_6$-$C_8$-n-Alkyl- oder n-Alkenylcarboxylat-Anion, ein $C_1$-$C_4$-n-Perfluoralkyl- oder $C_1$-$C_4$-n-Perfluoralkenylcarboxylat-Anion, ein Anion der Formel

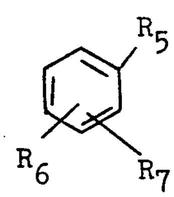 oder 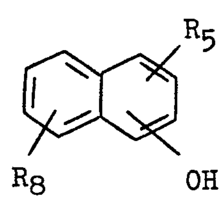

$R_5$-COO$^-$ oder -$SO_3^-$, $R_6$ $C_1$-$C_5$-Alkyl, $C_2$-$C_5$-Alkenyl oder $C_1$-$C_5$-Alkoxy in den Stellungen 3, 4 oder 5 zu $R_5$, $R_7$ Wasserstoff oder Hydroxy in den Stellungen 2 oder 3 zu $R_5$ oder $R_7$ $NO_2^-$, $F^-$, $Cl^-$, Br- oder $J^-$ in der Stellung 3 zu $R_5$, $R_8$ Wasserstoff oder Methyl, oder $A^-$ ein Jodid-, Rhodanid-Anion oder ein Anion der Formel $C_2Cl_{2n+1}COO^-$ mit n = 1,2 oder 3 und A- für den Fall der nichtfluorierten Gruppen unter der Bedeutung von R ein n-Fluoralkyl- oder n-Fluoralkenyl-carboxylat-Anion, wobei die Summe von (2 x + n) eine ganze Zahl von 19 bis 24 betragen soll, wenn x die Anzahl der C-Atome im Carboxylat-Anion und n die Anzahl der C-Atome in der Gruppe R ist; ein n-Fluoralkyl- oder n-Fluoralkenylsulfonat-Anion, wobei die Summe von (2y + n) 17 oder 18 betragen soll, wenn y die Anzahl der C-Atome im Sulfonat-Anion und n die Anzahl der C-Atome in der Gruppe R ist oder A- ein n-Alkyl- oder n-Alkenyl-carboxyl-Anion bedeutet, wobei die Summe (z + n) eine ganze Zahl größer als 23 betragen soll, ausgenommen n = 16, wenn z die Anzahl der C-Atome im Carboxylat-Anion und n die Anzahl der C-Atome in der Gruppe R ist.

3. Verfahren nach Anspruch 1, dadurch gekennzeichnet, daß man dem wäßrigen Medium eine Verbindung der Formel

$$R\text{-}K^+A^-$$

zugibt, wobei

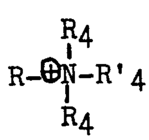 oder 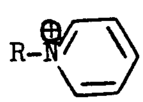

R eine Gruppe der Formeln
$C_nF_{2n+1}$-$C_lH_{2l}^-$, $C_nF_{2n+1}$-$C_lH_l$- $C_nF_{2n+1}$-$CONR_1C_kH_{2k}$- oder $C_nF_{2n+1}$-$C_2H_4SC_kH_{2k}$-, $C_nF_{2n+1}$ $SO_2NR_1C_kH_{2k}$-,

n eine Zahl von 2 bis 10, l eine Zahl von 2 bis 20, k eine Zahl von 2 bis 6, wobei die Summe (2n+l) eine Zahl von 12 bis 24 betragen soll, $R_4$ Methyl oder Ethyl, $R_4'$ Methyl, Ethyl, Hydroxymethyl oder Hydroxyethyl, $R_1$ Methyl oder Ethyl,

$A^-$ ein 2-Hydroxyphenylsulfonat-, m-Halogenbezoat- oder Salicylat-Anion, ein Anion der Formel

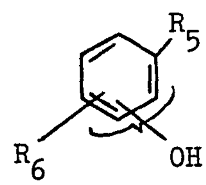

worin $R_5$ $COO^-$ oder $SO_3^-$ und $R_6$ $C_nH_{2n+1}$- oder $C_nH_{2n}$- oder $C_nH_{2n+1}$-O- mit n einer Zahl von 1 bis 4 in den Stellungen 3, 4 oder 5 zu $R_5$ bedeuten oder $A^-$ eine 2-Hydroxy-1-naphthoat-, 3- oder 4-Hydroxy-2-naphthoat-, 2-Hydroxy-naphthalin-1-sulfonat-, 3- oder 4-Hydroxy-naphthalin-2-sulfonat-Anion, oder $A^-$ ein Anion der Formel $CF_3SO_3^-$ oder n-$C_xH_{2x+1}$-$SO_3^-$ ist, wobei x 6 ist für den Fall (2 n+l) mindestens 18, x ist 7 für den Fall (2n+l) mindestens 16 oder x ist 8 für den Fall (2 n+l) eine Zahl von 14 bis 18 oder $A^-$ ist ein Anion der Formel n-$C_xF_{2x+1}$-$COO^-$, wobei x 2 oder 3 ist, wenn (2n+l) eine Zahl von 16 bis 22 ist oder x ist 4 oder 5, wenn (2n+l) eine Zahl von 14 bis 20 ist oder x ist eine Zahl von 6 bis 9, wenn (2n+l) eine Zahl von 14 bis 22 ist, oder $A^-$ ein Anion der Formeln $SCN^-$, $J^-$ oder $CCl_3COO^-$ bedeutet für den Fall n mindestens 6 und (2n+l) mindestens 16.

4. Verfahren nach Anspruch 1, dadurch gekennzeichnet, daß man dem wäßrigen Medium eine Verbindung der Formel

$$R\text{-}K^+A^-$$

zugibt, wobei $R\text{-}K^+$ ein Kation der Formel

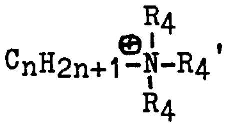 oder 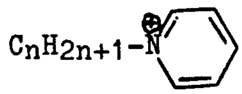

n eine Zahl von 1 bis 22, $R_4$ Methyl oder Ethyl, $R_4'$ Wasserstoff, Methyl, Ethyl, Hydroxymethyl oder Hydroxyethyl, $A^-$ ein Anion der Formeln $n\text{-}C_2F_{2x+1}\text{-}COO^-$ bedeutet, wobei x 2 oder 3 ist, wenn n+2x eine Zahl von 20 bis 28 ist, oder x ist 4 oder 5 wenn n+2x eine Zahl von 20 bis 26 ist, oder x ist eine Zahl von 6 bis 9 , wenn n+2x eine Zahl von 19 bis 22 ist, oder $A^-$ ist ein Anion der Formel $n\text{-}C_xH_{2x+1}COO^-$, wobei x eine Zahl von 7 bis 9 ist, wenn (n+x) eine Zahl von 23 bis 31 ist, ausgenommen den Fall n = 16, oder $A^-$ ein Anion der Formel $n\text{-}C_xF_{2x+1}\text{-}SO_3^-$, wobei x eine Zahl ist, die so gewählt ist, daß die Summe (2x+n) 17 oder 18 beträgt.

5. Verfahren nach Anspruch 1 zur Mobilitätskontrolle des Flutwassers bei der tertiären Erdölförderung.

FIG.1

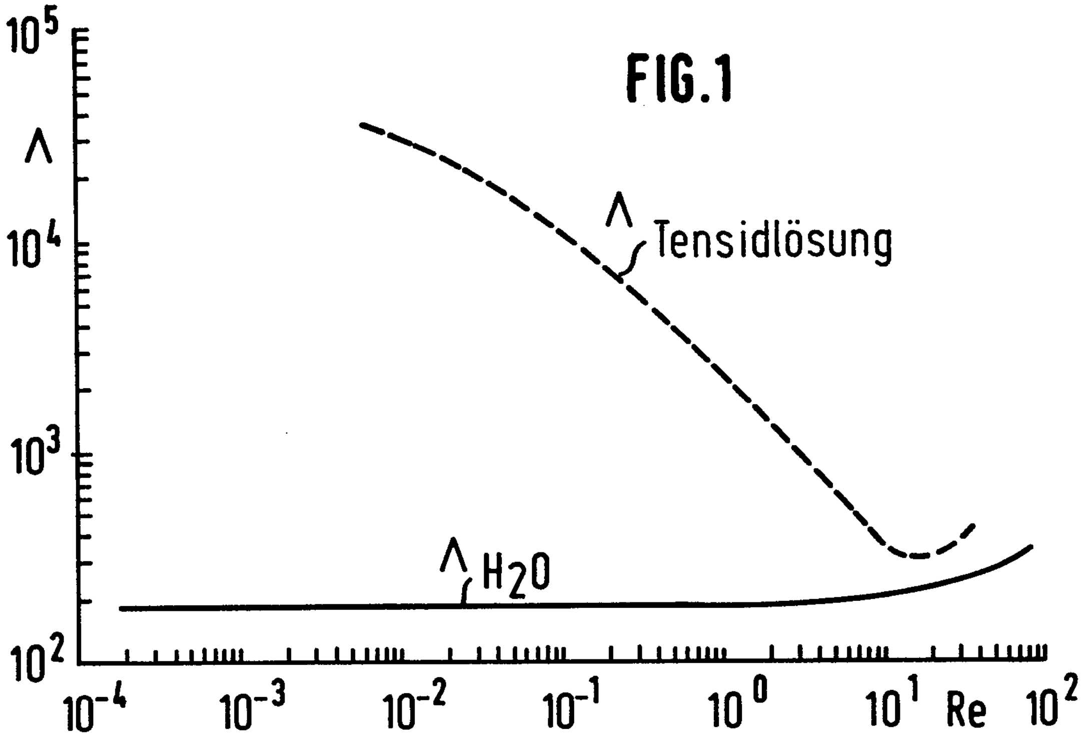
10^5
Λ
10^4
Λ Tensidlösung
10^3
Λ H2O
10^2
10^-4
10^-3
10^-2
10^-1
10^0
10^1
Re
10^2

FIG.2

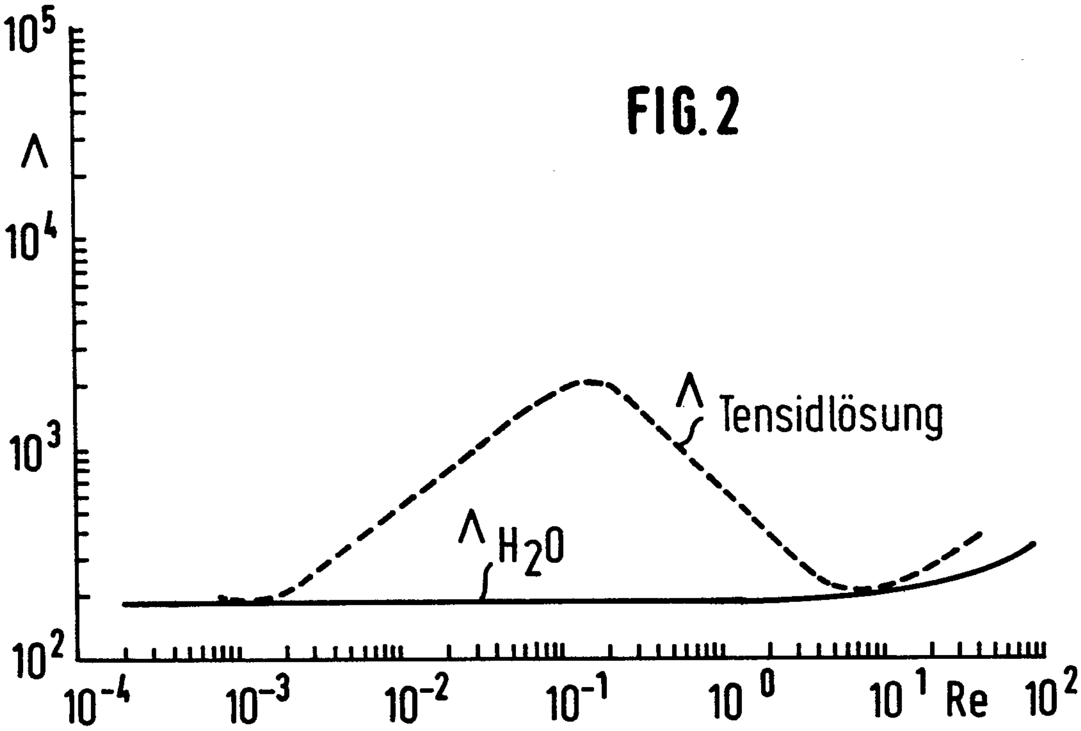
10^5
Λ
10^4
Λ Tensidlösung
10^3
Λ H2O
10^2
10^-4
10^-3
10^-2
10^-1
10^0
10^1
Re
10^2